# EUROPEAN PATENT SPECIFICATION

(11) **EP 4 257 655 B1**
(45) Date of publication and mention of the grant of the patent: **15.10.2025**
(21) Application number: 21899408.5
(22) Date of filing: 07.01.2021
(51) Int. Cl.: C09J 133/24, C09J 177/00, C09J 135/00, C08F 8/30, C08F 8/44, C08F 210/14, C08F 222/06, C09J 123/36, C09J 135/06

(54) **CROSSLINKED COPOLYMER OF REPEAT UNIT HAVING AMIDE GROUP AND CARBOXYL AND/OR AMMONIUM SALT THEREOF AND REPEAT UNIT OF ALPHA-MONOOLEFINS**
VERNETZTES COPOLYMER EINER WIEDERHOLUNGSEINHEIT MIT AMIDGRUPPE UND CARBOXYL- UND/ODER AMMONIUMSALZ DAVON UND WIEDERHOLUNGSEINHEIT VON ALPHA-MONOOLEFINEN
COPOLYMÈRE RÉTICULÉ DE MOTIF DE RÉPÉTITION COMPRENANT UN GROUPE AMIDE ET UN CARBOXYLE ET/OU UN SEL D'AMMONIUM ASSOCIÉ ET UN MOTIF DE RÉPÉTITION D'ALPHA-MONOOLÉFINES

(30) Priority: 02.12.2020 CN 202011391525
(43) Date of publication of application: 11.10.2023
(73) Proprietor: Tsinghua University, Beijing 100084 (CN)
(72) Inventor: YANG, Wantai, Beijing 100084 (CN); HUANG, Yanbin, Beijing 100084 (CN)
(74) Representative: Steffan & Kiehne Patentanwälte PartG mbB
(86) International application number: PCT/CN2021/070698
(87) International publication number: WO 2022/116364

(56) References cited:
- CN-A- 1 944 014
- CN-A- 104 136 540
- GB-A- 1 363 512
- GB-A- 1 363 512
- GB-A- 756 269
- JP-A- S49 131 243
- JP-A- S5 649 706
- JP-A- S62 235 380
- US-A1- 2016 001 506

## Description

### TECHNICAL FIELD

The present disclosure relates to a copolymer A, which has (i) at least one repeating unit carrying an amide group and a carboxyl and/or its ammonium salt, (ii) at least one repeating unit derived from linear or branched C₂-C₁₈ α-monoolefin, and (iii) at least one repeating unit derived from a monomer having at least two carbon-carbon unsaturated double bonds. The present disclosure also relates to an adhesive comprising the copolymer A and an article comprising a component formed from the adhesive of the present invention.

### TECHNICAL BACKGROUND

In current adhesives, especially adhesives used in artificial board production, the "trialdehyde adhesive" (urea-formaldehyde resin, phenol-formaldehyde resin and melamine-formaldehyde resin) prepared with formaldehyde as the raw material occupies a large proportion, exceeding 80%. "Trialdehyde adhesive" is simple to prepare and low in price, but this type of board will release free formaldehyde for a long-time during use, pollute the indoor environment, and seriously threaten the health of residents.

Some documents have proposed solutions to reduce the formaldehyde emission of "trialdehyde adhesive" type artificial boards. For example, CN107033309A attempts to reduce the release of formaldehyde by adjusting the ratio of raw materials and the pH value of each polymerization stage, and adding formaldehyde trapping agents. CN203344147U discloses that active carbon, bamboo charcoal, diatomaceous earth, and the like are mixed in the production of boards to give the boards a certain gas adsorption capacity. CN104136540 discloses an adhesive composition that can include at least one polyamidoamine prepolymer and at least one copolymer. The copolymer may comprise one or more vinyl arene derived units, and one or more unsaturated carboxylic acids, one or more unsaturated carboxylic anhydrides, or combinations thereof. The copolymer can be modified by reaction with one or more alkali compounds.

However, the above methods do not fundamentally solve the problem, and formaldehyde is still released during use of the boards.

Adhesives prepared based on soy protein, tannin, starch, gelatin and other biomass raw materials do not involve the use of formaldehyde, but the rapid degradation of biomass raw materials brings a problem of easy aging of the board. Although the addition of anti-aging agents can delay degradation to a certain extent, biomass-based adhesives still have problems of high cost and resource, which also limits their practical use.

In addition, polymers such as polyvinyl chloride, high molecular weight polyethylene, neoprene, and the like can also be used for board production, but these polymers are not water-soluble and cannot form water-based adhesives. They can only mix polymers and wood raw materials through hot melt or organic solvents, and still have disadvantages of high cost, energy consumption and not environmental-friendly.

Therefore, it is particularly important to develop a new formaldehyde-free copolymer that can be used in adhesives in consideration of safety and environmental-friendly, low production cost, ease of application process and durability of the finished product.

### SUMMARY OF THE INVENTION

In view of the above-mentioned state of the prior art, the inventors of the present invention have conducted extensive and in-depth research on copolymers in the field of adhesives, in order to find a copolymer that has no formaldehyde emission, low cost, easy application and excellent performance and can be used in adhesives. The inventors have discovered a specific copolymer A and an adhesive comprising the specific copolymer A, which not only has no formaldehyde emission, is low in cost, easy to apply, and has excellent performance.

The present invention has been completed based on the above findings and is disclosed in the appended claims.

### BRIEF DESCRIPTION OF THE DRAWINGS

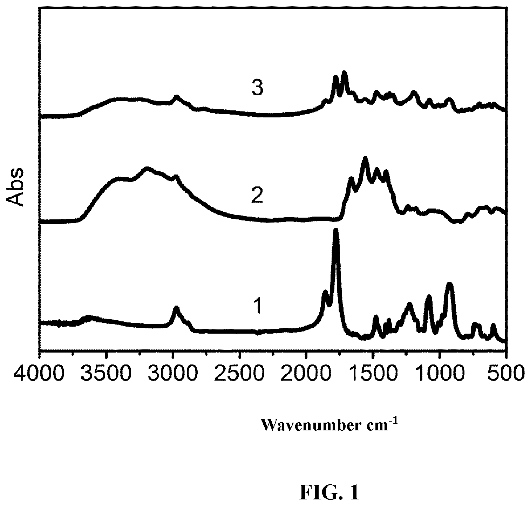

Figure 1. Infrared spectra of different polymers in Example 3, from bottom to top respectively are 1: infrared spectrum of crosslinked isobutylene-maleic anhydride copolymer; 2: infrared spectrum of the copolymer converted into amic acid; 3: infrared spectrum of the copolymer after hot pressing.

### DETAILED DESCRIPTION OF THE INVENTION

The specific values disclosed herein for related features (including the endpoint values of the disclosed ranges) can be combined with each other to form new ranges.

### Copolymer A

One aspect of the present invention relates to a copolymer A, which has
(i) at least one repeating unit carrying an amide group and a carboxyl and/or its ammonium salt,
(ii) at least one repeating unit derived from linear or branched C₂-C₁₈ α-monoolefin, and
(iii) at least one repeating unit derived from a monomer having at least two carbon-carbon unsaturated double bonds.

According to the present invention, the repeating unit (i) in copolymer (A) is different from repeating unit (ii) and repeating unit (iii).

According to the present invention, part of carboxyl (for example 1 to 10 wt.%) in the repeating unit (i) of copolymer A can be in the form of its ammonium salt.

Those skilled in the art can understand that the expression "derived from" also includes the case where the copolymer has a certain repeating unit, but the repeating unit is not directly formed by the monomer corresponding to the repeating unit. For example, the carboxyethylene repeating unit ( 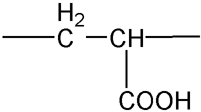 ) can be derived from polymerization of acrylic acid, or can be derived by polymerizing acrylate and then hydrolyzing.

In one embodiment of the present invention, the amount of the repeating unit (i) may be 10-80% by weight, for example, 20-80% by weight, 22-79% by weight, 22-78% by weight, 25-75% by weight, 30 -70% by weight or 35-65% by weight, based on the total amount of repeating units of copolymer A.

According to the present invention, the at least one repeating unit (ii) is derived from linear or branched C₂-C₁₈ α-monoolefin. The linear or branched C₂-C₁₈ α-monoolefin may be linear or branched C₂-C₁₆ α-monoolefin or C₄-C₁₆ α-monoolefin, linear or branched C₂-C₁₄ α-monoolefin or C₄-C₁₄ α-monoolefin, linear or branched C₂-C₁₂ α-monoolefin or C₄-C₁₂ α-monoolefin, linear or branched C₂-C₁₀ α-monoolefin or C₄-C₁₀ α-monoolefin, preferably linear or branched C₂-C₈ α-monoolefin or C₄-C₈ α-monoolefin.

As specific examples of these linear or branched C₂-C₁₈ α-monoolefins, ethylene, propylene, 1-butene, isobutene, 1-pentene, 1-hexene, 1-octene, 1-decene, 1-dodecene, 1-tetradecene, 1-hexadecene and 1-octadecene can be mentioned.

In the copolymer A, the amount of the repeating unit (ii) may be 10-75% by weight, 15-74% by weight, 17-73% by weight, 20-70% by weight, 25-65% by weight, or 30-60% by weight, based on the total amount of repeating units of copolymer A.

According to the present invention, the at least one repeating unit (iii) is derived from a monomer having at least two carbon-carbon unsaturated double bonds. According to an embodiment of the present invention, the carbon-carbon unsaturated double bond in the monomer having at least two (such as 2 to 4) carbon-carbon unsaturated double bonds are selected from carbon-carbon double bonds in (meth)acrylate group, (meth)acrylamide group, vinyl, allyl, and alkene or cycloalkene.

The amount of the repeating unit (iii) may be 0.1-70% by weight, such as 0.1-30% by weight, 0.2-20% by weight, 0.2-10% by weight, or 0.5-5% by weight, based on the total amount of repeating units of copolymer A.

Since the copolymer A has at least one repeating unit (iii) derived from a monomer having at least two carbon-carbon unsaturated double bonds, the copolymer A is generally crosslinked.

According to the present invention, the copolymer A may optionally comprise a supplementary repeating unit. The supplementary repeating unit can be selected, for example, from repeating units derived from the following monomers:
monoethylenically unsaturated C₃-C₈ monocarboxylic acid, C₁-C₁₀ alkyl ester of monoethylenically unsaturated C₃-C₈ monocarboxylic acid, amide of monoethylenically unsaturated C₃-C₈ monocarboxylic acid, vinyl alkyl ether having C₁-C₈ alkyl, styrene, non-α-monoolefin C₄-C₂₂ monoolefin, styrene substituted with one or more substituents selected from C₁-C₁₂ alkyl, C₁-C₁₂ alkoxy and halogen, vinyl ester of C₁-C₂₀ carboxylic acid, vinyl pyrrolidone, (meth)acrylonitrile, hydroxy-containing ethylenically unsaturated monomer, N-vinyl formamide, vinyl imidazole, allylbenzene, indene, methyl indene, and a furan ring-containing compound,
   or
the supplementary repeating unit is derived from at least one monomer containing carbon-carbon unsaturated double bond derived from reaction materials selected from gasoline, C₄ fraction, C₅ fraction, C₈ fraction, C₉ fraction or coal tar light fraction.

The details of the monomer of repeating unit (i), the monomer of repeating unit (ii), the monomer of repeating unit (iii), the monomer of supplementary repeating unit, and the reaction materials are described in detail below for the copolymer B.

According to a preferred embodiment of the present invention, the copolymer A is derived from the copolymer B, which has:
(i') at least one repeating unit carrying an anhydride group,
(ii) at least one repeating unit derived from linear or branched C₂-C₁₈ α-monoolefin, and
(iii) at least one repeating unit derived from a monomer having at least two carbon-carbon unsaturated double bonds.

In a preferred embodiment, the copolymer A is derived from the reaction of the copolymer B with ammonia.

According to a preferred embodiment of the present invention, the repeating unit (i') carrying an anhydride group of the copolymer B is derived from at least one monomer having a carbon-carbon unsaturated double bond and an anhydride group. According to the present invention, the monomer having a carbon-carbon unsaturated double bond and an anhydride group may be selected from monoethylenically unsaturated dicarboxylic anhydrides having 4 to 8 carbon atoms, preferably maleic anhydride, itaconic anhydride, citraconic anhydride, methylene malonic anhydride, and a mixture thereof, more preferably maleic anhydride.

In the copolymer B, the amount of repeating unit (i') can be 10-80% by weight, for example, 20-80% by weight, 22-79% by weight, 22-78% by weight, 25-75% by weight, 30-70% by weight, or 35-65% by weight, based on the total amount of repeating units of copolymer B.

The repeating unit (ii) in the copolymer B is as described above for the copolymer (A). In the copolymer B, the amount of repeating unit (ii) may be 10-75% by weight, 15-74% by weight, 17-73% by weight, 20-70% by weight, 25-65% by weight, or 30-60% by weight, based on the total amount of repeating units of copolymer B.

According to the present invention, the at least one repeating unit (iii) is derived from a monomer having at least two carbon-carbon unsaturated double bonds. According to an embodiment of the present invention, the carbon-carbon unsaturated double bond in the monomer having at least two (such as 2 to 4) carbon-carbon unsaturated double bonds is selected from carbon-carbon double bonds in (meth)acrylate group, (meth)acrylamide group, vinyl, allyl, and alkene or cycloalkene.

The monomer having at least two carbon-carbon unsaturated double bonds may be selected, for example, from (meth)acrylate of alcohol having at least 2 hydroxyl groups, vinyl ether of alcohol having at least 2 hydroxyl groups, allyl ether of alcohol with at least 2 hydroxyl groups, di(meth)acrylate of ethylene oxide and/or propylene oxide oligomer, vinyl (meth)acrylate, allyl (meth)acrylate, methylenebis(meth)acrylamide, aromatic compound having at least two vinyl groups, and C₄-C₂₂ diene.

The alcohol having at least two hydroxyl groups may, for example, have 2 to 6, preferably 2 to 4 hydroxyl groups. These alcohols may be selected from diols having 2 to 6 carbon atoms such as ethylene glycol, propylene glycol, butylene glycol, pentylene gylcol and hexylene glycol, glycerol, trimethylolpropane, pentaerythritol, and the like.

Therefore, (meth)acrylate of alcohol having at least 2 hydroxyl groups may be di(meth)acrylate of diol containing 2 to 6 carbon atoms, which may be selected from ethylene glycol diacrylate, ethylene glycol dimethacrylate, 1,2-propylene glycol diacrylate, 1,2-propylene glycol dimethacrylate, butanediol di(meth)acrylate, such as butane-1,4-diol diacrylate, butane-1,4-diol dimethacrylate, hexanediol diacrylate, hexanediol dimethacrylate, neopentyl glycol diacrylate, neopentyl glycol dimethacrylate, 3-methylpentanediol diacrylate and 3-methylpentanediol dimethacrylate.

Examples of di(meth)acrylate of ethylene oxide and/or propylene oxide oligomer are diethylene glycol diacrylate, diethylene glycol dimethacrylate, triethylene glycol diacrylate, triethylene glycol dimethacrylate, tetraethylene glycol diacrylate, and tetraethylene glycol dimethacrylate.

As examples of the aromatic compound having at least two vinyl groups, divinylbenzene, divinyltoluene, trivinylbenzene, divinylnaphthalene, and the like can be mentioned.

C₄-C₂₂ diene may be alkadiene or cyclic diene. Said C₄-C₂₂ dienes may be conjugated or non-conjugated. Said C₄-C₂₂ dienes are, for example, conjugated or non-conjugated C₄-C₁₆ or C₅-C₁₆ alkadiene or cyclic diene, conjugated or non-conjugated C₄-C₁₂ or C₅-C₁₂ alkadiene or cyclic diene, conjugated or non-conjugated C₄-C₈ or C₅-C₈ alkadiene or cyclodiene; and bicyclic olefin having 8 to 20 carbon atoms, preferably 8 to 16 or 8 to 12 carbon atoms, such as dicyclopentadiene monomer, such as dicyclopentadiene, methyldicyclopentadiene (such as 2-methyldicyclopentadiene, 5-methyldicyclopentadiene), ethyldicyclopentadiene (such as 2-ethyldicyclopentadiene) and 5,5-dimethyldicyclopentadiene, and the like.

As specific examples of C₄-C₂₂ alkadiene or cyclodiene, it can be mentioned that 1,3-butadiene, 1,3-pentadiene, isoprene, 1,3-hexadiene, cyclopentadiene, methylcyclopentadiene, 1,3-cyclohexadiene, 1,4-pentadiene, 1,4-hexadiene, 1,5-hexadiene, 1,4-cyclohexadiene, 1,5-cyclooctadiene, and the like.

As other specific examples of monomer having at least two (such as 2 to 4) carbon-carbon unsaturated double bonds, it can be mentioned that trimethylolpropane tri(meth)acrylate, butanediol divinyl ether, trimethylolpropane trivinyl ether, pentaerythritol triallyl ether, methylene bis(meth)acrylamide, diallyl phthalate, and the like.

The amount of the repeating unit (iii) may be 0.1-70% by weight, such as 0.1-30% by weight, 0.2-20% by weight, 0.2-10% by weight, or 0.5-5% by weight, based on the total amount of repeating units of copolymer B.

According to the present invention, the copolymer B may optionally comprise a supplementary repeating unit. The supplementary repeating unit can be selected, for example, from repeating units derived from the following monomers:
monoethylenically unsaturated C₃-C₈ monocarboxylic acid, C₁-C₁₀ alkyl ester of monoethylenically unsaturated C₃-C₈ monocarboxylic acid, amide of monoethylenically unsaturated C₃-C₈ monocarboxylic acid, vinyl alkyl ether having C₁-C₈ alkyl, styrene, non-α-monoolefin C₄-C₂₂ monoolefin, styrene substituted with one or more substituents selected from C₁-C₁₂ alkyl, C₁-C₁₂ alkoxy and halogen, vinyl ester of C₁-C₂₀ carboxylic acid, vinyl pyrrolidone, (meth)acrylonitrile, hydroxy-containing ethylenically unsaturated monomer, N-vinyl formamide, vinyl imidazole, allylbenzene, indene, methyl indene, and a furan ring-containing compound,
   or
the supplementary repeating unit is derived from at least one monomer containing carbon-carbon unsaturated double bond derived from reaction materials selected from gasoline, C₄ fraction, C₅ fraction, C₈ fraction, C₉ fraction or coal tar light fraction.

As examples of monoethylenically unsaturated C₃-C₈ monocarboxylic acids, acrylic acid, methacrylic acid, crotonic acid and vinyl acetic acid can be mentioned, preferably, acrylic acid and methacrylic acid.

As examples of C₁-C₁₀ alkyl ester of monoethylenically unsaturated C₃-C₈ monocarboxylic acid, (meth)acrylate alkyl ester of C₁-C₁₀ alkyl can be mentioned, especially methyl methacrylate, methyl acrylate, N-butyl acrylate, ethyl acrylate and 2-ethylhexyl acrylate or a mixture thereof.

As an example of amide of monoethylenically unsaturated C₃-C₈ monocarboxylic acid, (meth)acrylamide can be mentioned in particular.

As vinyl alkyl ether having C₁-C₈ alkyl, preferably, vinyl alkyl ether having C₁-C₄ alkyl can be mentioned, such as methyl vinyl ether, ethyl vinyl ether, isobutyl vinyl ether, n-butyl vinyl ether, tert-butyl vinyl ether, n-pentyl vinyl ether, isopentyl vinyl ether, n-hexyl vinyl ether, n-octyl vinyl ether and 2-ethylhexyl vinyl ether.

The non-α-monoolefin C₄-C₂₂ monoolefin may be alkene and cycloalkene, for example, alkene or cycloalkene having 4 to 20 or 5 to 20 carbon atoms, such as 4 to 16 or 5 to 16 carbon atoms, or 4 to 8 or 5 to 8 carbon atoms, such as 2-butene, 2-pentene, 2-methyl-2-butene, cyclopentene, cyclohexene, cycloheptene, and the like; dihydrobicycloalkene having 5 to 20 carbon atoms, preferably 5 to 16 or 8-12 carbon atoms, especially dihydrodicyclopentadiene (such as 2,3-dihydrodicyclopentadiene), dihydromethyldicyclopentadiene and dihydrodimethyldicyclopentadiene, and the like.

For styrene substituted with one or more substituents selected from C₁-C₁₂ alkyl, C₁-C₁₂ alkoxy and halogen, the alkyl or alkoxy group preferably has 1 to 10 carbon atoms, such as 1 to 4 carbon atoms; the halogen is preferably chlorine and bromine. As specific examples, vinyl toluene (such as α-methylstyrene and p-methylstyrene), α-butylstyrene, 4-n-butylstyrene, 4-n-decylstyrene, p-methoxystyrene, chlorostyrene and bromostyrene can be mentioned.

As examples of vinyl ester of C₁-C₂₀ carboxylic acid, vinyl laurate, vinyl stearate, vinyl propionate, vinyl neodecanoate, and vinyl acetate can be mentioned.

Examples of ethylenically unsaturated monomer containing hydroxyl include C₁-C₁₀ hydroxyalkyl (meth)acrylate, for example, hydroxyethyl acrylate, hydroxyethyl methacrylate, 2-hydroxypropyl acrylate, 3-hydroxypropyl acrylate, 2-hydroxypropyl methacrylate, and 3-hydroxypropyl methacrylate.

As examples of furan ring-containing compounds, a monomer in which the furan ring is substituted with one or more (such as 2 to 4) substituents selected from C₁-C₁₂ alkyl and C₁-C₁₂ hydroxyalkyl can be mentioned, such as furfuryl alcohol. The furan ring may be further fused with a benzene ring, for example, methylbenzofuran.

In an embodiment of the present invention, the reaction material containing the at least one monomer containing carbon-carbon unsaturated double bond, saturated hydrocarbon, and other impurities that do not participate in polymerization, such as gasoline, C₄ fraction, C₅ fraction, C₈ fraction, C₉ fraction or coal tar light fraction, can be directly used without separation to obtain the supplementary repeating unit. When these reaction materials are used to form the copolymer B (for example, by free radical polymerization), a component other than the monomer containing carbon-carbon unsaturated double bond in these reaction materials can be used as solvent in the preparation process. When these fractions are used as reaction materials, the cost of the adhesive and artificial board of the present invention can be further reduced.

As C₄ fraction, it can be mentioned as a by-product of petroleum cracking or catalytic cracking to produce ethylene, which usually contains isobutene, 1-butene-1, 2-butene, butane and other components.

The C₄ fraction may have the following specific composition:

**Table 1**

| Type | Components |
|---|---|
| isobutane | 46.5% |
| n-butane | 7.1% |
| 1-butene | 11% |
| 2-butene | 18.8% |
| isobutylene | 16.6% |
| isopentane | 1% |

The C₅ fraction is usually the C₅ fraction from petroleum cracking. The C₅ fraction contains about 45-55% of diolefins and 8-15% of monoolefins. Other components in the C₅ fraction include 18-25% alkane, 1% alkyne, 10-20% C₄, benzene and other components.

The C₅ fraction may have the following specific composition:

**Table 2**

| Type | Components | Contents |
|---|---|---|
| dienes | isoprene, cyclopentadiene, dicyclopentadiene, 1,4-pentadiene, piperylene | About 50% |
| monoolefins | 1-pentene, 2-pentene, cyclopentene, 2-methyl-1-butene, 2-methyl-2-butene | About 10% |
| alkanes | isopentane, n-pentane, cyclopentane, 2-methylpentane, n-hexane, methylcyclopentane | About 20% |
| alkynes | 2-butyne, 3-pentene-1-yne | About 1% |
| others | total C₄, benzene and others | About 20% |

The C₈ and C₉ fractions are mainly derived from steam cracking process for ethylene production and naphtha platinum reforming process, and some are derived from toluene disproportionation or transalkylation products and coal tar.

The C₈ fraction usually comprises 22-35% of monoolefins, such as styrene, allylbenzene, vinyl toluene, indene, and methyl indene. Other components in C₈ fraction include 45-55% aromatic hydrocarbon and about 20% other unknown components.

The C₈ fraction may have the following specific composition:

**Table 3**

| Type | Components | Contents |
|---|---|---|
| monoolefins | styrene, allylbenzene, vinyl toluene, indene, methyl indene | about 30% |
| aromatic hydrocarbon | benzene, toluene, ethylbenzene, m-xylene, o-xylene, p-xylene, tetramethylbenzene, isopropylbenzene, n-propylbenzene, methyl ethyl benzene, trimethylbenzene, indane, naphthalene, tetrahydronaphthalene, α-methyl naphthalene, β-methylnaphthalene | about 50% |
| others | other unknown components | about 20% |

The C₉ fraction usually comprises 20-30% monoolefins (such as styrene, allylbenzene, vinyl toluene, indene) and 8-15% dienes. Other components in C₉ fraction comprise about 5% of alkanes, 40-50% of aromatic hydrocarbon, and about 10% of other unknown components. The C₉ fraction can have the following specific composition:

**Table 4**

| Type | Components | Contents |
|---|---|---|
| monoolefins | styrene, allylbenzene, vinyl toluene, dihydrodicyclopentadiene, dihydromethyldicyclopentadiene, dihydrodimethyldicyclopentadiene, indene, | about 30% |
| dienes | cyclopentadiene, methylcyclopentadiene, methyldicyclopentadiene | about 10% |
| alkanes | tetrahydrodicyclopentadiene, | about 5% |
| | tetrahydromethyldicyclopentadiene | |
| aromatic hydrocarbon | Toluene, ethylbenzene, m-xylene, o-xylene, p-xylene, isopropylbenzene, n-propylbenzene, methyl ethylbenzene, trimethylbenzene, indane | about 45% |
| others | other unknown components | about 10% |

The light oil components in coal tar mainly comprise styrene, α-methylstyrene, alkylbenzene, vinyl toluene, dicyclopentadiene, benzofuran, indene, methyl indene and methyl benzofuran, and the like, which are mainly used as raw material for dark-light coumarone resin. The coal tar light fraction can have the following specific composition:

**Table 5**

| Components | Contents |
|---|---|
| styrene | 2% |
| α-methylstyrene | 1% |
| alkylbenzene | 30% |
| vinyl toluene | 4% |
| dicyclopentadiene | 5% |
| benzofuran | 7% |
| indene | 48% |
| methyl indene and methyl benzofuran | 3% |

The polymerization to prepare copolymer B can be carried out using an oil-soluble free radical initiator. The oil-soluble free radical initiator includes, for example, azo initiator or peroxide initiator. The azo initiator includes: azobisisobutyronitrile, azobisisoheptonitrile, dimethyl azobisisobutyrate, and the like; the peroxide initiator includes: dibenzoyl peroxide, dicumyl peroxide, di(2,4-dichlorobenzoyl) peroxide, di-tert-butyl peroxide, lauryl peroxide, tert-butyl peroxybenzoate, diisopropyl peroxydicarbonate and dicyclohexyl peroxydicarbonate, and the like. The amount of the initiator is 0.05-10% by weight, preferably 0.5-6% by weight, based on the weight of the monomer.

The polymerization reaction can be carried out in the presence of a solvent. The solvent may include aromatic hydrocarbon, mixture of alkane and ketone, carboxylic acid ester, mixture of alkanes and aromatic hydrocarbon, mixture of aromatic hydrocarbon and carboxylic acid ester, or mixture of alkane and carboxylic acid ester, or mixture of alkane, aromatic hydrocarbon and carboxylic acid ester.

As examples of aromatic hydrocarbon, toluene, xylene, ethylbenzene and the like can be mentioned.

Carboxylic acid ester may include C₁-C₈ alkyl ester, phenyl ester or benzyl ester of C₁-C₆ carboxylic acid and C₁-C₈ alkyl ester of aromatic carboxylic acid having 6 to 10 carbon atoms. As specific examples, ester solvents can be mentioned, such as ethyl formate, propyl formate, isobutyl formate, pentyl formate, ethyl acetate, butyl acetate, isobutyl acetate, amyl acetate, isoamyl acetate, benzyl acetate, phenyl acetate, methyl propionate, ethyl propionate, propyl propionate, butyl propionate, methyl butyrate, ethyl butyrate, propyl butyrate, butyl butyrate, isobutyl butyrate, isoamyl butyrate, ethyl isobutyrate, ethyl isovalerate, isoamyl isovalerate, methyl benzoate, ethyl benzoate, propyl benzoate, butyl benzoate, isoamyl benzoate, methyl phenylacetate, ethyl phenylacetate, propyl phenylacetate, butyl phenylacetate and isoamyl phenylacetate, and the like.

The ketone in the mixture of alkane and ketone can be selected from acetone, butanone, cyclohexanone, methyl isobutyl ketone, methyl isopropyl ketone, and the alkanes can be selected from n-pentane, n-hexane, cyclohexane, n-heptane, n-octane, isooctane and the like. In the mixture of alkane and ketone, the ketone usually accounts for 5 to 65% by volume.

The polymerization reaction can be carried out in the presence of an inert gas such as nitrogen. The temperature of the polymerization reaction is usually 55 to 120°C, preferably 60 to 100°C; the time of the polymerization reaction is usually 1 to 12 hours, preferably 2 to 8 hours. After the polymerization reaction, the resulting copolymer B can be separated and dried.

In a preferred embodiment, the polymerization reaction is carried out by precipitation polymerization. The precipitation polymerization can be carried out by selecting a solvent that can dissolve the monomer but cannot dissolve the obtained copolymer B. Through precipitation polymerization, the copolymer B in powder form can be directly obtained.

According to the present invention, if gasoline, C₄ fraction, C₅ fraction, C₈ fraction, C₉ fraction and coal tar light fraction are used as reaction materials, unreacted mixture of alkane or aromatic hydrocarbon can be separated by simple distillation after completion of the reaction, thereby obtaining various high value-added solvents and industrial raw materials.

According to the present invention, the copolymer B can be reacted with ammonia to obtain the copolymer A (described in further detail below).

### Adhesive

One aspect of the present invention relates to an adhesive comprising the copolymer A of the present invention.

In the adhesive of the present invention, in addition to the copolymer A, if necessary, the adhesive of the present invention may further comprise at least one additive. The additives may be one or more of the following: oxygen scavenger, emulsifier, dye, pigment, anti-migration aid, UV absorber, biocide, defoamer, colorant, antistatic agent and antioxidant.

According to an embodiment, the adhesive of the present invention does not comprise an organic crosslinking agent capable of covalently crosslinking with the amide group and/or carboxyl of the copolymer A, such as polyol, polyamine, polyalkanolamine or a mixture thereof.

According to the present invention, the adhesive may be in solid form, preferably powder form; or in form of aqueous composition, preferably in form of aqueous solution.

In the adhesive of the present invention, the amount of the copolymer A based on the total amount of the adhesive (if the adhesive is in liquid state, such as an aqueous composition or aqueous solution, based on the solid content) may be 30-100% by weight, such as 50-100% by weight, 60-100% by weight, 70-100% by weight, 80-100% by weight, or 50-98% by weight, or 60-90% by weight.

If the adhesive is in the form of aqueous composition, preferably aqueous solution, the solid content of the adhesive may be 2-40% by weight, or 5-30% by weight, or 8-25% by weight.

### Method for preparing adhesive

One aspect of the present invention relates to a method for preparing the adhesive of the present invention, which comprises reacting the copolymer B with ammonia in the presence or absence of a reaction medium (such as water).

The copolymer B can react with ammonia to produce the copolymer A, that is, ammonolysis. The reaction generally involves reacting the copolymer B at a temperature below 100°C, preferably 15 to 70°C, for example at room temperature in an aqueous medium with ammonia under stirring. The reaction time is usually 1 to 10 hours, preferably 0.5 to 6 hours.

After the reaction, the resulting reaction mixture is usually an aqueous composition, preferably in the form of aqueous solution. The resulting aqueous composition, preferably an aqueous solution, can be used directly as an adhesive. The reaction mixture can also be used as an adhesive after mixing with at least one of the aforementioned additives.

Preferably, the copolymer B is in powder form before reacting with ammonia. Preferably, the copolymer B in powder form can be prepared by precipitation polymerization. The copolymer B in powder form can also be obtained by grinding the copolymer B (e.g., in bulk) into powder form. The average particle size of the copolymer B in powder form may be 0.01 to 10 µm, preferably 0.05 to 8 µm, more preferably 0.1 to 5 µm. The average particle size of the copolymer A in powder form may be 0.01 to 10 µm, preferably 0.05 to 8 µm, more preferably 0.1 to 5 µm.

The reaction time of the copolymer B in solid form with ammonia is usually 2 to 300 minutes, such as 5 to 120 minutes.

In specific applications, the copolymer A in solid form can be dissolved in water, and optionally mixed with at least one of the above additives before application.

The conversion rate of the anhydride groups of the copolymer B generally exceeds 90%, preferably exceeds 95%, and more preferably exceeds 98%, such as 100%.

In the reaction of the copolymer B with ammonia, the carboxyl group can also form an ammonium salt with ammonia.

### Article comprising component formed from the adhesive of the present invention

One aspect of the present invention relates to an article comprising a component formed from the adhesive of the present invention.

According to the present invention, the article can be artificial board, paper, cloth or paint.

In the article of the present invention, the adhesive can be used in an amount based on the solid content of 1-45% by weight, preferably 2-40% by weight, more preferably 3-35% by weight or 4-30% by weight, such as 5-25% by weight, 6-25% by weight, 7-25% by weight, 8-19% by weight, based on the total weight of the product.

In the article of the present invention, the copolymer A can be used in an amount of 1-40% by weight, preferably 2-30% by weight, more preferably 3-25% by weight or 4-20% by weight, such as 5-20% by weight, 6-20% by weight or 7-18% by weight, based on the total weight of the article.

In one embodiment, the article is an artificial board formed from a lignocellulose material and the adhesive of the present invention. The artificial board of the present invention should be understood in a broad sense, that is, a board formed from any lignocellulose material and the adhesive of the present invention. The artificial board of the present invention is not limited to those formed only of wood, and may include boards formed of materials such as bamboo and straw as described below. The artificial board of the present invention can be various types of artificial board. In one embodiment, the artificial board includes, but is not limited to, particle board, plywood, fiber board, density board, straw board, and finger joint board.

The lignocellulosic material can be derived from various lignocellulosic materials, such as wood, bamboo, bagasse, straw (such as wheat straw), flax residue, nut shell, grain shell, and the like, and a mixture thereof. The wood includes various softwoods and/or hardwoods.

The lignocellulosic material may be in the form of sawdust, shreds, wood chips, strips, flakes, fibers, sheets, wood dust, shavings, granules, and similar materials, as well as the form of combinations of these materials, such as strips and sawdust.

The lignocellulosic material can be processed by various conventional techniques. Large wood can be processed into wood chips in a round wood chipper. Large pieces of wood and leftovers may be cut into shreds. Large wood may also be chipped in a ring chipper. The large wood is usually peeled before chipping.

The size of the lignocellulosic material is generally not critical. Different sizes can be used for different types of artificial boards. For example, the size of the lignocellulose material can be 1 to 30 mesh, preferably 2 to 15 mesh. For sheet-like lignocellulose materials, the thickness of the sheet may be, for example, 0.5 mm to 5 cm, preferably 1 mm to 3 cm.

In the artificial board of the present invention, the adhesive is used as a matrix resin, preferably the adhesive fills the gap between the lignocellulose materials.

Another aspect of the present invention relates to a method for manufacturing the article of the invention, comprising using the adhesive of the invention.

According to the present invention, the artificial board can be prepared by the following method, the method comprises pressing a mixture of lignocellulose material and the adhesive of the present invention at a temperature of 105 to 300°C and a pressure of 0.4 to 10 MPa, preferably pressing for 2 to 60 minutes, more preferably 3 to 30 minutes, for example 5 to 30 minutes.

The mixture of the lignocellulose material and the adhesive of the present invention used for pressing can be prepared by mixing the lignocellulose material with the adhesive of the present invention. When the adhesive is solid, the adhesive can be first dissolved in water and then mixed with the lignocellulose material.

Before pressing, it is preferable to remove part of the water in the mixture of lignocellulose material and adhesive, for example, to reduce the water content of the mixture of lignocellulose material and adhesive to less than 30% by weight, preferably less than 25% by weight, for example less than 22% by weight, or less than 18% by weight. The water content of the mixture is usually higher than 5 % by weight or higher than 8 % by weight. The removal of the water can be carried out by heating, for example, the heating temperature can be 50 to 90°C, preferably 60 to 80°C.

In a preferred embodiment, the pressing is performed at a temperature of 120 to 220°C and/or a pressure of 1 to 6 MPa.

When the copolymer A has a carboxyl group in the form of its ammonium salt, the ammonium salt of the carboxyl group is decomposed into a carboxyl group again under pressing conditions.

### Use of adhesive

Finally, the present invention also relates to use of the adhesive of the present invention in the manufacture of artificial board, paper, cloth or coating.

The adhesive comprising the copolymer A of the present invention is safe, environmentally friendly, has no release of toxic and harmful substances such as formaldehyde, is simple to apply and has low cost, and the adhesive of the present invention has excellent performance and is particularly suitable for the manufacture of artificial board, paper, cloth or coating, especially the manufacture of lignocellulose-based artificial board, and the articles made with the adhesive of the present invention have excellent mechanical properties and water resistance.

### Examples

The technical solutions of the present invention are further described below in conjunction with specific embodiments of the present invention, but they should not be understood as limiting the protection scope of the present invention. The examples described below are only a part of the examples of the present invention, not all the examples. Based on the examples listed in the present invention, other examples proposed by those skilled in the art without creative work shall fall within the protection scope of the present invention. Unless otherwise specified, the percentages in the examples are percentages by weight, and the parts in the examples are parts by mass.

### Example 1: Ethylene copolymer system

Based on mass parts, 5.8 parts of ethylene, 19.6 parts of maleic anhydride, 0.3 parts of crosslinking agent divinylbenzene, 300 parts of benzene and 0.5 parts of azobisisobutyronitrile were mixed and dissolved in an autoclave, raised to a temperature of 70°C and reacted for 6 hours. The product was separated by centrifugation, washed with benzene, and dried to obtain a crosslinked ethylene-maleic anhydride copolymer as powdered product, in which the mass fraction of maleic anhydride units was about 78%.

10 parts of the ethylene-maleic anhydride copolymer, 5 parts of 37% ammonia water, and 85 parts of water were stirred at room temperature for 4 hours to obtain an ethylene-maleamic acid copolymer suspension with a mass concentration of 10% (the mole percentage of the monomer unit of maleic anhydride that had been aminolyzed in the copolymer was 99%). The suspension was mixed with poplar wood shavings (water content of 5%, 5 to 10 mesh) (8 parts of copolymer per 100 parts of shavings), and mixed uniformly to obtain a premix. The premix was dried at 70°C to remove water to water content of 15%.

The premix was placed in a 25 cm × 25 cm × 2.5 cm compression mold at a hot pressing temperature of 170°C, a pressure of 0.4 MPa, and a hot pressing time of 15 minutes to obtain a particle board with a thickness of 3 mm.

### Example 2: (N-Butene Copolymer System)

Based on the mass parts, 11.2 parts of n-butene, 19.6 parts of maleic anhydride, 0.4 parts of crosslinking agent ethylene glycol dimethacrylate, 300 parts of isoamyl acetate and 0.7 parts of azobisisobutyronitrile were mixed and dissolved in an autoclave, raised to a temperature of 70°C and reacted for 6 hours. The product was separated by centrifugation, washed, and dried to obtain a crosslinked n-butene-maleic anhydride copolymer as powdered product, in which the mass fraction of maleic anhydride units was about 64%.

10 parts of the n-butene-maleic anhydride copolymer, 5 parts of 37% ammonia water, and 85 parts of water were stirred at room temperature for 4 hours to obtain an n-butene-maleamic acid copolymer suspension with a mass concentration of 10% (the mole percentage of the monomer unit of maleic anhydride that had been aminolyzed in the copolymer was 99%). The suspension was mixed with poplar wood shavings (water content of 5%, 5 to 10 mesh) (8 parts of copolymer per 100 parts of shavings), and mixed uniformly to obtain a premix. The premix was dried at 70°C to remove water to water content of 10%.

The premix was placed in a 25 cm × 25 cm × 2.5 cm compression mold at a hot pressing temperature of 160°C, a pressure of 0.8 MPa, and a hot pressing time of 12 minutes to obtain a particle board with a thickness of 3 mm.

### Example 3: (Isobutylene copolymer system)

Based on the mass parts, 11.2 parts of isobutylene, 19.6 parts of maleic anhydride, 0.4 parts of crosslinking agent ethylene glycol dimethacrylate, 300 parts of isoamyl acetate and 0.6 parts of azobisisobutyronitrile were mixed and dissolved in an autoclave, raised to a temperature of 70°C and reacted for 6 hours. The product was separated by centrifugation, washed, and dried to obtain a crosslinked isobutylene-maleic anhydride copolymer as powdered product, in which the mass fraction of maleic anhydride units was about 64%.

10 parts of the isobutylene-maleic anhydride copolymer, 5 parts of 37% ammonia water, and 85 parts of water were stirred at room temperature for 4 hours to obtain an isobutylene-maleamic acid copolymer suspension with a mass concentration of 10% (the mole percentage of the monomer unit of maleic anhydride that had been aminolyzed in the copolymer was 99%). The suspension was mixed with poplar wood shavings (water content of 5%, 5 to 10 mesh) (8 parts of copolymer per 100 parts of shavings), and mixed uniformly to obtain a premix. The premix was dried at 70°C to remove water to water content of 15%.

The premix was placed in a 25 cm × 25 cm × 2.5 cm compression mold at a hot pressing temperature of 170°C, a pressure of 0.4 MPa, and a hot pressing time of 15 minutes to obtain a particle board with a thickness of 3 mm.

From bottom to top in Figure 1 respectively are 1: infrared spectrum of crosslinked isobutylene-maleic anhydride copolymer; 2: infrared spectrum of the copolymer converted into amic acid; 3: infrared spectrum of the copolymer after hot pressing, where:
Curve 1: C=O stretching vibration peaks of the two carbonyl on the anhydride are at 1858 cm⁻¹ and 1778 cm⁻¹;
Curve 2: C=O stretching vibration peak of amide is at 1661 cm⁻¹, C=O stretching vibration peak of carboxylate is at 1557 cm⁻¹, and the characteristic peak of the original anhydride group basically disappeared.
Curve 3: the characteristic peaks of cyclic imide are at 1778 cm⁻¹, 1715 cm⁻¹.

### Example 4: (1-pentene copolymer system)

Based on the mass parts, 14 parts of 1-pentene, 19.6 parts of maleic anhydride, 0.3 parts of crosslinking agent divinylbenzene, 300 parts of isoamyl acetate and 0.7 parts of azobisisobutyronitrile were mixed and dissolved. The system was vented with nitrogen for 20 minutes, and reacted at 70°C for 6 hours. The product was separated by centrifugation, washed, and dried to obtain a crosslinked 1-pentene-maleic anhydride copolymer as white powder, in which the mass fraction of maleic anhydride monomer units was 58%.

20 parts of the 1-pentene-maleic anhydride copolymer, 10 parts of 37% ammonia water, and 70 parts of water were stirred at room temperature for 4 hours to obtain a 1-pentene-maleamic acid copolymer suspension with a mass concentration of 20% (the mole percentage of the monomer unit of maleic anhydride that had been aminolyzed in the copolymer was 99%). The suspension was mixed with poplar wood shavings (water content of 5%, 5 to 10 mesh) (12 parts of copolymer per 100 parts of shavings), and mixed uniformly to obtain a premix. The premix was dried at 70°C to remove water to water content of 20%.

The premix was placed in a 25 cm × 25 cm × 2.5 cm compression mold at a hot pressing temperature of 180°C, a pressure of 1 MPa, and a hot pressing time of 15 minutes to obtain a particle board with a thickness of 3 mm.

### Example 5: (1-decene copolymer system)

Based on the mass parts, 28 parts of 1-decene, 19.6 parts of maleic anhydride, 0.3 parts of crosslinking agent divinylbenzene, 300 parts of isoamyl acetate and 0.7 parts of azobisisobutyronitrile were mixed and dissolved. The system was vented with nitrogen for 20 minutes, and reacted at 70°C for 6 hours. The product was separated by centrifugation, washed, and dried to obtain a crosslinked 1-decene-maleic anhydride copolymer as white powder, in which the mass fraction of maleic anhydride monomer units was 41%.

20 parts of the 1-decene-maleic anhydride copolymer, 10 parts of 37% ammonia water, and 70 parts of water were stirred at room temperature for 4 hours to obtain a 1-decene-maleamic acid copolymer suspension with a mass concentration of 20% (the mole percentage of the monomer unit of maleic anhydride that had been aminolyzed in the copolymer was 99%). The suspension was mixed with poplar wood shavings (water content of 5%, 5 to 10 mesh) (12 parts of copolymer per 100 parts of shavings), and mixed uniformly to obtain a premix. The premix was dried at 70°C to remove water to water content of 10%.

The premix was placed in a 25 cm × 25 cm × 2.5 cm compression mold at a hot pressing temperature of 160°C, a pressure of 1 MPa, and a hot pressing time of 15 minutes to obtain a particle board with a thickness of 3 mm.

### Example 6: (1-tetradecene copolymer system)

Based on the mass parts, 39.2 parts of 1-tetradecene, 19.6 parts of maleic anhydride, 0.4 parts of crosslinking agent ethylene glycol dimethacrylate, 300 parts of isoamyl acetate and 0.7 parts of azobisisobutyronitrile were mixed and dissolved. The system was vented with nitrogen for 20 minutes, and reacted at 70°C for 6 hours. The product was separated by centrifugation, washed, and dried to obtain a crosslinked 1-tetradecene-maleic anhydride copolymer as white powder, in which the mass fraction of maleic anhydride monomer units was 33%.

20 parts of the 1-tetradecene-maleic anhydride copolymer, 10 parts of 37% ammonia water, and 70 parts of water were stirred at room temperature for 4 hours to obtain a 1-tetradecene- maleamic acid copolymer suspension with a mass concentration of 20% (the mole percentage of the monomer unit of maleic anhydride that had been aminolyzed in the copolymer was 99%). The suspension was mixed with poplar wood shavings (water content of 5%, 5 to 10 mesh) (12 parts of copolymer per 100 parts of shavings), and mixed uniformly to obtain a premix. The premix was dried at 70°C to remove water to water content of 20%.

The premix was placed in a 25 cm × 25 cm × 2.5 cm compression mold at a hot pressing temperature of 170°C, a pressure of 0.5 MPa, and a hot pressing time of 15 minutes to obtain a particle board with a thickness of 3 mm.

### Example 7: (1-octadecene copolymer system)

Based on the mass parts, 50.4 parts of 1-octadecene, 19.6 parts of maleic anhydride, 0.3 parts of crosslinking agent divinylbenzene, 300 parts of isoamyl acetate and 0.7 parts of azobisisobutyronitrile were mixed and dissolved. The system was vented with nitrogen for 20 minutes, and reacted at 70°C for 6 hours. The product was separated by centrifugation, washed, and dried to obtain a crosslinked 1-octadecene-maleic anhydride copolymer as white powder, in which the mass fraction of maleic anhydride monomer units was 28%.

20 parts of the 1-octadecene-maleic anhydride copolymer, 10 parts of 37% ammonia water, and 70 parts of water were stirred at room temperature for 4 hours to obtain a 1-octadecene- maleamic acid copolymer suspension with a mass concentration of 20% (the mole percentage of the monomer unit of maleic anhydride that had been aminolyzed in the copolymer was 99%). The suspension was mixed with poplar wood shavings (water content of 5%, 5 to 10 mesh) (12 parts of copolymer per 100 parts of shavings), and mixed uniformly to obtain a premix. The premix was dried at 70°C to remove water to water content of 15%.

The premix was placed in a 25 cm × 25 cm × 2.5 cm compression mold at a hot pressing temperature of 160°C, a pressure of 1 MPa, and a hot pressing time of 15 minutes to obtain a particle board with a thickness of 3 mm.

### Example 8: (mixed α-olefin copolymer system)

Based on the mass parts, 4.7 parts of 1-pentene, 9.3 parts of 1-decene and 14.9 parts of 1-hexadecene, 0.3 parts of crosslinking agent divinylbenzene, 19.6 parts of maleic anhydride, 300 parts of isoamyl acetate and 0.7 parts of azobisisobutyronitrile were mixed and dissolved. The system was vented with nitrogen for 20 minutes, and reacted at 70°C for 6 hours. The product was separated by centrifugation, washed, and dried to obtain a crosslinked mixed olefin-maleic anhydride copolymer as white powder, in which the mass fraction of maleic anhydride monomer units was 43%.

20 parts of the mixed olefin-maleic anhydride copolymer, 10 parts of 37% ammonia water, and 70 parts of water were stirred at room temperature for 4 hours to obtain a mixed olefin- maleamic acid copolymer suspension with a mass concentration of 20% (the mole percentage of the monomer unit of maleic anhydride that had been aminolyzed in the copolymer was 99%). The suspension was mixed with poplar wood shavings (water content of 5%, 5 to 10 mesh) (12 parts of copolymer per 100 parts of shavings), and mixed uniformly to obtain a premix. The premix was dried at 70°C to remove water to water content of 20%.

The premix was placed in a 25 cm × 25 cm × 2.5 cm compression mold at a hot pressing temperature of 180°C, a pressure of 1 MPa, and a hot pressing time of 15 minutes to obtain a particle board with a thickness of 3 mm.

### Comparative example 1

Based on mass parts, 10 parts of isobutylene, 17.5 parts of maleic anhydride, 100 parts of isoamyl acetate and 0.3 parts of BPO were mixed and dissolved. The system was vented with nitrogen for 20 minutes and reacted at 70°C for 8 hours. The product was centrifuged, washed with petroleum ether three times, and dried to obtain an isobutylene-maleic anhydride copolymer as white powder. The mass percentage of maleic anhydride monomer units in the copolymer was 63%.

10 parts of isobutylene-maleic anhydride copolymer, 10 parts of 37% ammonia water and 80 parts of water were stirred at room temperature for 4 hours to obtain a viscous liquid with a mass concentration of 10%. The viscous liquid was mixed with poplar wood shavings (water content of 5%, 5 to 10 mesh) (20 parts of copolymer per 100 parts of shavings), and mixed uniformly to obtain a premix. The premix was dried at 70°C to remove water to water content of 10%.

The premix was placed in a 25 cm × 25 cm × 2.5 cm compression mold at a hot pressing temperature of 170°C, a pressure of 0.4 MPa, and a hot pressing time of 12 minutes to obtain a particle board with a thickness of 3 mm.

### Performance testing

According to GB/T 4897-2015, the particle boards obtained in Examples 1-8 and Comparative Example 1 were tested for internal bonding strength, 24 hours water absorption thickness expansion rate, and moisture resistance (internal bonding strength after boiling water test). The results are listed in Table 6 below.

**Table 6: Performance data of particle boards in Examples 1-8 and Comparative Example 1**

| No. | 24 hours water absorption thickness expansion rate (%) | Internal bonding strength (MPa) | Internal bonding strength after boiling water test (MPa) |
|---|---|---|---|
| Example 1 | 19 | 0.49 | 0.15 |
| Example 2 | 18 | 0.63 | 0.24 |
| Example 3 | 18 | 0.64 | 0.24 |
| Example 4 | 17 | 0.75 | 0.35 |
| Example 5 | 15 | 0.60 | 0.30 |
| Example 6 | 15 | 0.57 | 0.21 |
| Example 7 | 15 | 0.48 | 0.20 |
| Example 8 | 16 | 0.61 | 0.25 |
| Comparative Example 1 | 19 | 0.45 | 0.10 |

| | | | |
|---|---|---|---|
| *Each data in the table is the average of 6 measurements. | | | |

The various properties of the particle boards in Examples 1-8 were better than the performance requirements of the furniture-type particle board used in the wet state in the national standard, and at the same time better than the performance of the particleboard of Comparative Example 1.

Without wishing to be bound by any theory, it is believed that the amide group and carboxyl group on the polymer in the adhesive of the present invention can be dehydrated to produce imide group under pressing conditions, and the carboxyl group can also be dehydrated to produce anhydride group. The anhydride group can react with the hydroxyl group on the lignocellulose material to produce an ester, which helps to improve the mechanical properties and water resistance of the resulting artificial board.

The above are only the preferred embodiments of the present invention. It should be pointed out that for those skilled in the art, several improvements and modifications made within the scope of the principle of the present invention should also be regarded as the protection scope of the present invention.

## Claims

1. A copolymer A, which has
(i) at least one repeating unit carrying an amide group and a carboxyl and/or its ammonium salt,
(ii) at least one repeating unit derived from linear or branched C₂-C₁₈ α-monoolefin, and
(iii) at least one repeating unit derived from a monomer having at least two carbon-carbon unsaturated double bonds.

2. The copolymer A according to claim 1, wherein in the copolymer A, the amount of the repeating unit (i) is 10-80% by weight, preferably 20-80% by weight or 22-79% by weight, based on the total amount of repeating units of copolymer A.

3. The copolymer A according to claim 1 or 2, wherein the linear or branched C₂-C₁₈ α-monoolefin is a linear or branched C₂-C₁₂ α-monoolefin, preferably a linear or branched C₂-C₈ α-monoolefin.

4. The copolymer A according to any one of claims 1 to 3, wherein in the copolymer A, the amount of the repeating unit (ii) is 10-75% by weight, preferably 15-74% by weight or 20-70% by weight, based on the total amount of repeating units of copolymer A.

5. The copolymer A according to any one of claims 1 to 4, wherein in the copolymer A, the amount of the repeating unit (iii) is 0.1-70% by weight, preferably 0.1-30% by weight, based on the total amount of repeating units of copolymer A.

6. The copolymer A according to any one of claims 1 to 5, wherein the copolymer A is derived from a copolymer B, which has:
(i') at least one repeating unit carrying an anhydride group,
(ii) at least one repeating unit derived from linear or branched C₂-C₁₈ α-monoolefin, and
(iii) at least one repeating unit derived from a monomer having at least two carbon-carbon unsaturated double bonds.

7. The copolymer A according to claim 6, wherein the repeating unit (i') carrying an anhydride group of the copolymer B is derived from at least one monomer having a carbon-carbon unsaturated double bond and an anhydride group.

8. The copolymer A according to any one of claims 1-7, wherein the copolymer A is derived from a reaction of the copolymer B with ammonia.

9. An adhesive comprising the copolymer A according to any one of claims 1-8.

10. The adhesive according to claim 9, wherein the adhesive is in solid form, preferably powder form; or in form of aqueous composition, preferably in form of aqueous solution, preferably the content of the copolymer A is 2-40% by weight, especially 5-30% by weight, based on the total weight of the aqueous composition.

11. An article comprising a component formed from the adhesive according to any one of claims 9 or 10.

12. The article according to claim 11, wherein the article is artificial board, paper, cloth or paint.

13. The article according to claim 12, wherein the article is an artificial board formed of a lignocellulose material and the adhesive.

14. The article according to any one of claims 11-13, wherein the copolymer A as defined in any one of claims 1-8 is used in an amount of 1-40% by weight, preferably 2-30% by weight, more preferably 3-25% by weight, based on the total weight of the article.

15. Use of the adhesive according to any one of claims 9 or 10 in manufacture of artificial boards, paper, cloth or coatings.

## Patentansprüche

1. Copolymer A, das aufweist:
(i) zumindest eine sich wiederholende Einheit, die eine Amidgruppe und eine Carboxylgruppe und/oder deren Ammoniumsalz trägt,
(ii) zumindest eine sich wiederholende Einheit, die von einem linearen oder verzweigten C₂-C₁₈-α-Monoolefin abgeleitet ist, und
(iii) zumindest eine sich wiederholende Einheit, die von einem Monomer abgeleitet ist, das zumindest zwei ungesättigte Kohlenstoff-KohlenstoffDoppelbindungen aufweist.

2. Copolymer A nach Anspruch 1, wobei in dem Copolymer A die Menge der sich wiederholenden Einheit (i) 10 - 80 Gew.-%, vorzugsweise 20 - 80 Gew.-% oder 22 - 79 Gew.-% beträgt, jeweils bezogen auf die Gesamtmenge der sich wiederholenden Einheiten des Copolymers A.

3. Copolymer A nach Anspruch 1 oder 2, wobei das lineare oder verzweigte C₂-C₁₈-α-Monoolefin ein lineares oder verzweigtes C₂-C₁₂-α-Monoolefin ist, vorzugsweise ein lineares oder verzweigtes C₂-C₈-α-Monoolefin.

4. Copolymer A nach einem der Ansprüche 1 bis 3, wobei in dem Copolymer A die Menge der sich wiederholenden Einheit (ii) 10 - 75 Gew.-%, vorzugsweise 15 - 74 Gew.-% oder 20 - 70 Gew.-% beträgt, jeweils bezogen auf die Gesamtmenge der sich wiederholenden Einheiten des Copolymers A.

5. Copolymer A nach einem der Ansprüche 1 bis 4, wobei in dem Copolymer A die Menge der sich wiederholenden Einheit (iii) 0,1 - 70 Gew.-%, vorzugsweise 0,1 - 30 Gew.-% beträgt, jeweils bezogen auf die Gesamtmenge der sich wiederholenden Einheiten des Copolymers A.

6. Copolymer A nach einem der Ansprüche 1 bis 5, wobei das Copolymer A von einem Copolymer B abgeleitet ist, das aufweist:
(i') zumindest eine sich wiederholende Einheit, die eine Anhydridgruppe trägt,
(ii) zumindest eine sich wiederholende Einheit, die von einem linearen oder verzweigten C₂-C₁₈-α-Monoolefin abgeleitet ist,
und
(iii) zumindest eine sich wiederholende Einheit, die von einem Monomer abgeleitet ist, das zumindest zwei ungesättigte Kohlenstoff-KohlenstoffDoppelbindungen aufweist.

7. Copolymer A nach Anspruch 6, wobei die sich wiederholende Einheit (i') des Copolymers B, die eine Anhydridgruppe trägt, von zumindest einem Monomer, das eine ungesättigte Kohlenstoff-Kohlenstoff-Doppelbindung und eine Anhydridguppe aufweist, abgeleitet ist.

8. Copolymer A nach einem der Ansprüche 1 bis 7, wobei das Copolymer A von einer Reaktion des Copolymers B mit Ammoniak abgeleitet ist.

9. Klebstoff umfassend das Copolymer A nach einem der Ansprüche 1 bis 8.

10. Klebstoff nach Anspruch 9, wobei der Klebstoff in fester Form, vorzugsweise Pulverform, oder in Form einer wässrigen Zusammensetzung, vorzugsweise einer wässrigen Lösung, vorliegt, wobei der Gehalt an dem Copolymer A 2 - 40 Gew.-%, insbesondere 5 - 30 Gew.-%, jeweils bezogen auf das Gesamtgewicht der wässrigen Zusammensetzung beträgt.

11. Gegenstand, umfassend eine Komponente, die aus dem Klebstoff nach einem der Ansprüche 9 oder 10 gebildet ist.

12. Gegenstand nach Anspruch 11, wobei der Gegenstand eine künstliche Platte, Papier, Stoff oder Anstrich ist.

13. Gegenstand nach Anspruch 12, wobei der Gegenstand eine künstliche Platte ist, die aus einem Lignocellulose-Material und dem Klebstoff gebildet ist.

14. Gegenstand nach einem der Ansprüche 11 bis 13, wobei das Copolymer A, wie es in einem der Ansprüche 1 bis 8 definiert wird, in einer Menge von 1 - 40 Gew.-%, vorzugsweise 2 - 30 Gew.-%, noch bevorzugter 3 - 25 Gew.-%, jeweils bezogen auf das Gesamtgewicht des Gegenstandes, verwendet wird.

15. Verwendung des Klebstoffs nach einem der Ansprüche 9 oder 10 in der Herstellung von künstlichen Platten, Papier, Stoff oder Anstrichen.

## Revendications

1. Copolymère A, ayant
(i) au moins une unité de répétition portant un groupe amide et un carboxyle et/ou son sel d'ammonium,
(ii) au moins une unité de répétition dérivée d'une α-monooléfine linéaire ou ramifiée en C₂-C₁₈, et
(iii) au moins une unité de répétition dérivée d'un monomère ayant au moins deux doubles liaisons carbone-carbone insaturées.

2. Copolymère A selon la revendication 1, dans lequel, dans le copolymère A, la quantité de l'unité de répétition (i) est de 10 à 80 % en poids, de préférence de 20 à 80 % en poids ou de 22 à 79 % en poids, par rapport à la quantité totale d'unités de répétition du copolymère A.

3. Copolymère A selon la revendication 1 ou 2, dans lequel l'α-monooléfine linéaire ou ramifiée en C₂-C₁₈ est une α-monooléfine linéaire ou ramifiée en C₂-C₁₂, de préférence une α-monooléfine linéaire ou ramifiée en C₂-C₈.

4. Copolymère A selon l'une quelconque des revendications 1 à 3, dans lequel, dans le copolymère A, la quantité de l'unité de répétition (ii) est de 10 à 75 % en poids, de préférence de 15 à 74 % en poids ou de 20 à 70 % en poids, par rapport à la quantité totale d'unités de répétition du copolymère A.

5. Copolymère A selon l'une quelconque des revendications 1 à 4, dans lequel, dans le copolymère A, la quantité de l'unité de répétition (iii) est de 0,1 à 70 % en poids, de préférence de 0,1 à 30 % en poids, par rapport à la quantité totale d'unités de répétition du copolymère A.

6. Copolymère A selon l'une quelconque des revendications 1 à 5, dans lequel le copolymère A est dérivé d'un copolymère B, qui a :
(i) au moins une unité de répétition portant un groupe anhydride,
(ii) au moins une unité de répétition dérivée d'une α-monooléfine linéaire ou ramifiée en C₂-C₁₈,
et
(iii) au moins une unité de répétition dérivée d'un monomère ayant au moins deux doubles liaisons carbone-carbone insaturées.

7. Copolymère A selon la revendication 6, dans lequel l'unité de répétition (i') portant un groupe anhydride du copolymère B est dérivée d'au moins un monomère ayant une double liaison carbone-carbone insaturée et un groupe anhydride.

8. Copolymère A selon l'une quelconque des revendications 1 à 7, dans lequel le copolymère A est dérivé d'une réaction du copolymère B avec de l'ammoniaque.

9. Adhésif comprenant le copolymère A selon l'une quelconque des revendications 1 à 8.

10. Adhésif selon la revendication 9, dans lequel l'adhésif est sous forme solide, de préférence sous forme de poudre ; ou sous forme de composition aqueuse, de préférence sous forme de solution aqueuse, de préférence la teneur en copolymère A est de 2 à 40 % en poids, en particulier de 5 à 30 % en poids, par rapport au poids total de la composition aqueuse.

11. Article comprenant un composant formé à partir de l'adhésif selon l'une quelconque des revendications 9 ou 10.

12. Article selon la revendication 11, dans lequel l'article est un panneau artificiel, du papier, du tissu ou de la peinture.

13. Article selon la revendication 12, dans lequel l'article est un panneau artificiel formé d'un matériau lignocellulosique et de l'adhésif.

14. Article selon l'une quelconque des revendications 11 à 13, dans lequel le copolymère A comme défini dans l'une des revendications 1 à 8 est utilisé dans une quantité de 1 à 40 % en poids, de préférence 2 à 30 % en poids, de manière plus préférée 3 à 25 % en poids, par rapport au poids total de l'article.

15. Utilisation de l'adhésif selon l'une quelconque des revendications 9 ou 10 dans la fabrication de panneaux artificiels, de papier, de tissu ou de revêtements.
